# FASCICULE DE BREVET EUROPEEN

(11) **EP 3 459 770 B1**
(45) Date de publication et mention de la délivrance du brevet: **06.01.2021**
(21) Numéro de dépôt: 18192274.1
(22) Date de dépôt: 03.09.2018
(51) Int. Cl.: B60H 1/32, B60H 1/00, F24F 5/00

(54) **TRANSPORT CRYOGENIQUE DE PRODUITS THERMOSENSIBLES VALORISANT LE FUEL OPERANT LE MOTEUR DU VÉHICULE A L'AIDE D'UN MODULE EUTECTIQUE DE STOCKAGE DU FROID**
KRYOGENER TRANSPORT VON WÄRMEEMPFINDLICHEN PRODUKTEN, BEI DEM DER KRAFTSTOFF, DER DEN FAHRZEUGMOTOR ANTREIBT, ÜBER EIN EUTEKTISCHES KÄLTESPEICHERMODUL GENUTZT WIRD
CRYOGENIC TRANSPORT OF TEMPERATURE-SENSITIVE PRODUCTS MAKING USE OF THE FUEL OPERATING THE VEHICLE ENGINE USING A EUTECTIC COLD STORAGE MODULE

(30) Priorité: 20.09.2017 FR 1758700
(43) Date de publication de la demande: 27.03.2019
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BERNARD, Jean-Pierre, 78280 GUYANCOURT (FR); DALLAIS, Antony, 91640 Janvry (FR); TAMMAR, Moez, 92160 ANTONY (FR)
(74) Mandataire: Air Liquide

(56) Documents cités:
- WO-A1-2011/141287
- WO-A1-2015/011581
- CN-U- 201 907 386

## Description

La présente invention concerne le domaine des procédés de transport et de distribution de produits thermosensibles, tels les produits pharmaceutiques et les produits alimentaires, en camions frigorifiques, et elle s'intéresse tout particulièrement à l'une des techniques utilisées dans ce type de camions, dite technique de l'« injection indirecte » qui met en œuvre un (ou plusieurs) échangeur(s) de chaleur (par exemple des serpentins ou batteries à ailettes), dans lequel circule un fluide cryogénique tel l'azote liquide ou le CO₂ liquide, l'enceinte interne (chambre froide) au camion étant par ailleurs munie d'un système de circulation d'air (ventilateurs) mettant en contact cet air avec les parois froides de l'échangeur, ce qui permet ainsi de refroidir l'air interne à la chambre froide du camion, le fluide cryogénique qui alimente le ou les échangeur(s) provenant d'un réservoir de cryogène liquide traditionnellement situé sous le camion.

Les ambiances maintenues à l'intérieur de la chambre froide peuvent être prévues aussi bien pour des produits frais (classiquement une température voisine de 4°C) que pour des produits surgelés (classiquement une température voisine de -20°C).

A titre illustratif, ces échangeurs ou unités frigorifiques peuvent être constitués de batterie(s) échangeur(s) à extension de surface de type tubes/ailettes (ailettes continues ou indépendantes), en cuivre et/ou aluminium ou d'autres matériaux, la batterie étant alimentée en cryogène liquide, par exemple en azote liquide. Cette batterie est par exemple placée dans une caisse qui guide le flux d'air aspiré par le ventilateur évoqué ci-dessus. L'air aspiré est donc refroidi lors de son passage à travers la batterie au contact des ailettes froides et des tubes alimentés en azote liquide.

Le contrôle de procédé typiquement mis en œuvre dans de tels camions fonctionnant en injection indirecte est le plus souvent le suivant :
1- lors de la mise en route du système frigorifique du camion (par exemple au démarrage d'une tournée ou après un arrêt prolongé du système frigorifique pour une raison quelconque) ou encore après une ouverture de porte, on adopte un mode de descente rapide en température (cette industrie nomme cette phase « pull-down »).
2- Une fois la température de consigne atteinte dans la chambre de stockage des produits, on adopte un mode de contrôle/régulation qui permet de maintenir la température de la chambre de stockage des produits à une valeur de consigne (phase traditionnellement appelée phase de «maintien»).

Or, les besoins frigorifiques dans chacune de ces deux phases, en termes de puissance frigorifique requise, sont extrêmement différents.

En effet, en phase de « pull down », il est souvent demandé d'avoir une descente rapide en température de l'air de la chambre. Pour obtenir cet effet, il faut fournir une grande puissance frigorifique capable de vaincre l'inertie thermique de tout le système (air, groupe cryogénique, parois du camion) et les entrées de chaleurs à travers les parois du camion et via les ouvertures de ses portes. Ces besoins frigorifiques baissent drastiquement en phase de maintien étant donné que seules les entrées de chaleur à travers les parois persistent.

En d'autres termes, les besoins frigorifiques d'un camion durant une tournée donnée oscillent entre deux niveaux que l'on peut qualifier de « pleine charge » et « charge partielle ».

Si la puissance frigorifique en phase de maintien doit absolument atteindre un niveau minimum requis, celle correspondant à la pleine charge reste au choix du concepteur du système frigorifique. Plus la puissance de pleine charge est grande plus on assure une descente et un retour rapide de la température de l'air interne à la chambre à la température de consigne.

Les systèmes existant, utilisant à titre d'exemple l'azote liquide, fonctionnent par exemple avec une pression « nominale » dans le réservoir à un niveau quasi-fixe avoisinant 3,2 bar relatif. La modularité de fonctionnement est aujourd'hui le plus souvent obtenue au travers d'une régulation des vannes d'injection du liquide en mode tout ou rien (« TOR ») ou en mode proportionnelle.

Il existe par ailleurs une littérature abondante, proposant d'utiliser le fuel (gaz naturel) constituant le carburant du véhicule en question, pour refroidir la chambre froide du véhicule, que le fuel soit utilisé à cette fin seul ou en coopération avec un autre cryogène utilisé pour l'injection indirecte tel l'azote liquide ou le CO₂ liquide.

On peut citer ici le document EP-788 908 ou encore que le document WO2011/141287. Les documents CN201907386U et WO2015/011581 montrent des dispositifs de stockage thermique pour refroidir l'espace de chargement en relation avec l'alimentation en carburant du moteur du véhicule.

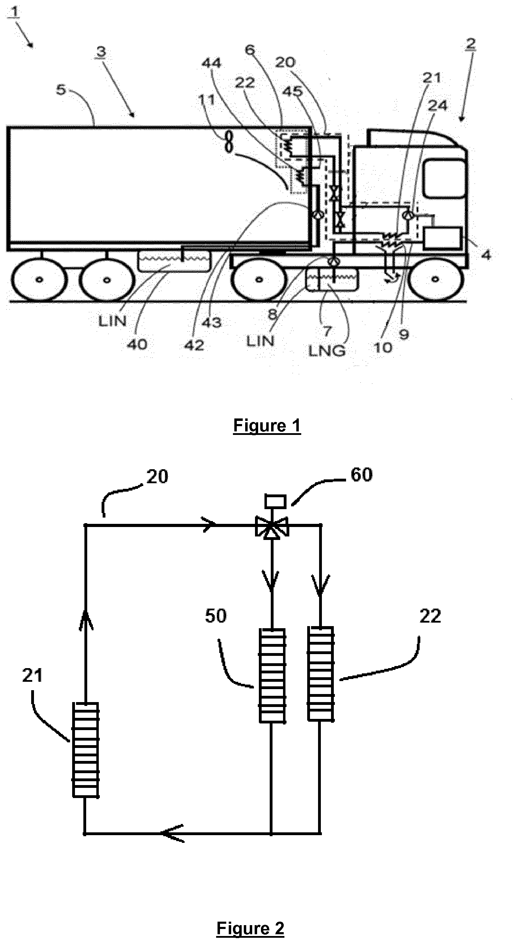

Ainsi, dans le cas du document WO2011/141287, pour lequel on pourra se reporter pour une meilleure compréhension à la figure 1 annexée ci-après (dans une version quelque peu épurée pour une meilleure lisibilité), il est proposé de refroidir les produits transportés à l'aide de l'azote liquide, ou du gaz naturel, ou de l'intervention des deux fluides combinés, ceci grâce à la présence d'un échangeur thermique « additionnel » dans la chambre :
- le camion est donc muni d'un réservoir d'azote liquide 40, d'un réservoir de gaz naturel liquéfié 7, et d'un système de refroidissement par injection indirecte d'azote liquide dans un échangeur (principal) 44 interne à la chambre ;
- le camion est donc par ailleurs muni d'un échangeur « additionnel » 22, également interne à la chambre, échangeur additionnel qui entre dans une boucle 20 avec le réservoir de gaz naturel 7 et un échangeur 21, boucle dans laquelle circule un fluide de refroidissement (par exemple une huile). En d'autres termes, le fuel est vaporisé dans un échangeur 10 avant d'aller alimenter le moteur, échangeur 10 situé en contrebas de l'échangeur 21, et la chaleur requise pour réaliser cette évaporation dans l'échangeur 10 peut être extraite de l'intérieur de la caisse via l'échangeur additionnel 22 et la boucle 20... etc...

Il apparaît dès lors que cette configuration est très intéressante, mais qu'elle pourrait être améliorée puisqu'en effet, selon ce document, l'énergie frigorifique du gaz naturel liquide n'est pas récupérée quand il n'y a pas de besoins d'apport de froid dans la caisse isotherme du camion. On peut dès lors considérer qu'il est nécessaire d'améliorer ce qu'on appelle le « coût global de possession du camion » (en anglais « Total Cost of Ownership »), qui représente le coût du cycle de vie d'un produit.

Un des objectifs de la présente invention est alors de proposer une infrastructure de camion et un fonctionnement permettant d'améliorer la proposition technique du document WO2011/141287 ci-dessus évoqué, et notamment d'élargir le périmètre d'utilisation, à tout type de camions utilisant des échangeurs complémentaires, non seulement les systèmes fonctionnant à l'azote liquide, mais aussi tous les systèmes frigorifiques fonctionnant au CO₂ liquide, fluide frigorigènes, ...etc.

Pour cela ; comme on le verra plus en détails dans ce qui suit, on dispose dans la chambre d'une unité de stockage de froid de type plaque eutectique ou de type élaboré en un matériau dit « à changement de phase » (« MCP »).

L'invention concerne alors un procédé de gestion du fonctionnement d'un camion de transport frigorifique de produits thermosensibles, du type à injection indirecte, où le camion est muni :
- d'au moins une chambre de stockage des produits,
- d'une réserve d'un fluide cryogénique ou frigorigène tel l'azote liquide ou le CO₂ liquide ;
- d'une réserve de fuel constituant le carburant pour le moteur du camion ;
- d'un système d'échangeur thermique principal dans lequel circule le fluide cryogénique, système d'échangeur comprenant au moins un échangeur thermique interne à ladite au moins une chambre ainsi que d'un système de circulation d'air, par exemple de type ventilateurs, apte à mettre en contact l'air interne à la chambre avec les parois froides du ou des échangeurs du système d'échangeur thermique principal;
- d'au moins un échangeur thermique additionnel, interne à ladite au moins une chambre, échangeur additionnel connecté à d'autres composants permettant la formation d'une boucle d'échange thermique, boucle dans laquelle circule un fluide de refroidissement (par exemple le Therminol D12) ;
- d'un évaporateur pour gaz combustibles liquéfiés, évaporateur apte à recevoir du fuel en provenance de la dite réserve de fuel et apte à échanger thermiquement avec ladite boucle, évaporateur qui est par ailleurs situé hors de la dite chambre et hors de la dite boucle;
- et l'on dispose d'au moins une sonde de température apte à mesurer la température interne à la chambre et de moyens permettant de comparer la valeur fournie par cette sonde à une consigne de température interne ;
ladite boucle comprenant un échangeur thermique secondaire apte à échanger thermiquement avec ledit évaporateur, l'échangeur thermique secondaire étant relié par la boucle audit échangeur additionnel,
se caractérisant par la mise en oeuvre des mesures suivantes :
- le camion est muni de plus d'une unité de stockage de froid de type plaque eutectique ou de type élaboré en un matériau dit « à changement de phase » (« MCP »), unité qui est située au sein de la dite chambre, l'espace interne à ladite chambre étant refroidi par extraction de la chaleur de l'espace à l'aide dudit échangeur principal et/ou dudit échangeur additionnel et/ou de ladite unité de stockage de froid, la chaleur extraite à l'aide dudit échangeur additionnel étant dirigée grâce à la boucle vers ledit échangeur thermique secondaire, et donc vers l'évaporateur, pour contribuer à l'évaporation dudit fuel ; et en ce que
- lorsque le moteur du camion est en fonctionnement et que la chambre ne nécessite pas d'apport de froid, tout ou partie du froid généré lors de la vaporisation du fuel est stocké dans ladite unité de stockage de froid pour une utilisation ultérieure.

Selon l'un des modes de mise en oeuvre de l'invention, le camion est muni d'un unique système de ventilation, et l'arrangement dans la chambre de l'échangeur thermique principal, de l'échangeur thermique additionnel et de l'unité de stockage de froid est tel, que le système de ventilation est apte à mettre en contact l'air interne à la chambre avec les parois de l'échangeur thermique principal, avec les parois de l'échangeur thermique additionnel et avec l'unité de stockage de froid.

Mais ceci n'est bien entendu qu'un des modes envisagés, il peut au contraire être avantageux de pouvoir clairement séparer les flux d'air atteignant chacun des échangeurs (principal, additionnel et de stockage) en mettant en œuvre non pas un unique système de ventilation mais trois systèmes distincts.

L'invention concerne également un camion de transport frigorifique de produits thermosensibles, du type à injection indirecte, où le camion est muni :
- d'au moins une chambre de stockage des produits,
- d'une réserve d'un fluide cryogénique ou frigorigène tel l'azote liquide ou le CO₂ liquide,
- d'une réserve de fuel constituant le carburant pour le moteur du camion ;
- d'un système d'échangeur thermique principal dans lequel circule le fluide cryogénique, système d'échangeur comprenant au moins un échangeur thermique interne à ladite au moins une chambre,
- ainsi que d'un système de circulation d'air, par exemple de type ventilateurs, apte à mettre en contact l'air interne à la chambre avec les parois froides du ou des échangeurs du système d'échangeur thermique principal;
- d'au moins un échangeur thermique additionnel, interne à ladite au moins une chambre, échangeur additionnel connecté à d'autres composants permettant la formation d'une boucle d'échange thermique, boucle dans laquelle circule un fluide de refroidissement;
- d'un évaporateur pour gaz combustibles liquéfiés, évaporateur apte à recevoir du fuel en provenance de la dite réserve de fuel et apte à échanger thermiquement avec ladite boucle, évaporateur qui est par ailleurs situé hors de la dite chambre et hors de la dite boucle;
- d'au moins une sonde de température apte à mesurer la température interne à la chambre et de moyens permettant de comparer la valeur fournie par cette sonde à une consigne de température interne ;
ladite boucle comprenant un échangeur thermique secondaire apte à échanger thermiquement avec ledit évaporateur, l'échangeur thermique secondaire étant relié par la boucle audit échangeur additionnel,
se caractérisant en ce que le camion est muni de plus d'une unité de stockage de froid de type plaque eutectique ou de type élaboré en un matériau dit « à changement de phase », unité qui est située au sein de la dite chambre, l'espace interne à ladite chambre pouvant être refroidi par extraction de la chaleur de l'espace à l'aide dudit échangeur principal et/ou dudit échangeur additionnel et/ou de ladite unité de stockage de froid, la chaleur extraite à l'aide dudit échangeur additionnel pouvant être dirigée grâce à la boucle vers ledit évaporateur pour contribuer à l'évaporation dudit fuel.

Nous détaillons ci-dessous, pour permettre de mieux comprendre l'invention, certaines situations de nécessité d'apport, ou non, de froid à la chambre de stockage des produits.
i) : nous avons évoqué ci-dessus le cas où la chambre ne nécessite pas d'apport de froid, à titre illustratif cette situation se produit quand le camion rentre à vide à sa base logistique. Et comme on l'a vu ci-dessus, conformément à l'invention, lorsque le moteur du camion est en fonctionnement, on récupère le (ou une partie du) froid généré lors de la vaporisation du fuel pour le stocker dans l'unité de stockage de froid pour une utilisation ultérieure (quand la chambre nécessitera un apport de froid), ceci jusqu'à recharge complète ou partielle en froid des plaques eutectiques ou du matériau MCP.
j) : Cas où la chambre nécessite un apport de froid (par exemple en phase de « pull down » (descente rapide) ou encore en phase de maintien) :
   - si le moteur du camion est en fonctionnement : selon un mode préféré de mise en œuvre de l'invention, on va réaliser cet apport de froid grâce à l'intervention de la boucle et à l'échangeur additionnel, et si nécessaire par l'apport supplémentaire du froid stocké dans l'unité de stockage. Dans cette situation, on ne fera intervenir l'échangeur principal (injection indirecte d'azote liquide ou de CO₂ liquide) que si les autres apports ne suffisent pas et notamment si la température dans la chambre est « durablement » supérieure à une température de consigne ou si la vitesse de descente de cette température est insuffisamment élevée, par exemple inférieure à 0.5°C/mn.
   - si le moteur du camion est arrêté : on utilisera préférentiellement dans un premier temps le froid stocké dans l'unité de stockage, et ici encore on ne mettra en œuvre l'échangeur principal (injection indirecte d'azote liquide ou de CO₂ liquide) que si l'apport précédent ne suffit pas et notamment si la température dans la chambre est « durablement » supérieure à une ou si la vitesse de descente de cette température est insuffisamment élevée, par exemple inférieure à 0.5°C/mn.
   - selon chaque cas, et notamment selon les produits transportés, selon la situation de température extérieure etc...il peut être avantageux en terme de régulation de prévoir le cas suivant, où la chambre ne nécessite pas d'apport de froid et où le moteur du camion est en fonctionnement, et ainsi de faire intervenir la boucle et l'échangeur additionnel, pour maintenir la température dans la chambre à une valeur moyenne à définir (par exemple +10°C) qui permet d'éviter de remonter trop haut en température (trop loin de la consigne souhaitée), et ainsi anticiper les phases nécessitant des puissances de froid plus importantes ultérieurement.

La figure 2 montre alors un mode de réalisation de la boucle 20, incluant l'unité de stockage de froid 50, en parallèle de l'échangeur additionnel 22, en d'autres termes le fluide frigoporteur circulant dans la boucle peut passer, depuis l'échangeur 21, grâce à la vanne trois voies 60, dans l'échangeur additionnel 22 ou bien dans l'unité de stockage de froid 50 selon les besoins et les instructions des moyens de régulations présents sur l'installation.

## Revendications

1. Procédé de gestion du fonctionnement d'un camion de transport frigorifique de produits thermosensibles, du type à injection indirecte, où le camion est muni :
- d'au moins une chambre (5) de stockage des produits ;
- d'une réserve (40) d'un fluide cryogénique ou frigorigène tel l'azote liquide ou le CO₂ liquide ;
- d'une réserve (7) de fuel constituant le carburant pour le moteur du camion ;
- d'un système d'échangeur thermique principal (44) dans lequel circule le fluide cryogénique, système d'échangeur comprenant au moins un échangeur thermique interne à ladite au moins une chambre ainsi que d'un système de circulation d'air, par exemple de type ventilateurs, apte à mettre en contact l'air interne à la chambre avec les parois froides du ou des échangeurs du système d'échangeur thermique principal;
- d'au moins un échangeur thermique additionnel (22), interne à ladite au moins une chambre, échangeur additionnel connecté à d'autres composants permettant la formation d'une boucle (20) d'échange thermique, boucle dans laquelle circule un fluide de refroidissement;
- d'un évaporateur (10) pour gaz combustibles liquéfiés, évaporateur apte à recevoir du fuel en provenance de la dite réserve de fuel et apte à échanger thermiquement avec ladite boucle, évaporateur qui est par ailleurs situé hors de la dite chambre et hors de la dite boucle;
- et l'on dispose d'au moins une sonde de température apte à mesurer la température interne à la chambre ainsi que de moyens permettant de comparer la valeur fournie par cette sonde à une consigne de température interne à la chambre;
ladite boucle comprenant un échangeur thermique secondaire (21) apte à échanger thermiquement avec ledit évaporateur (10), l'échangeur thermique secondaire (21) étant relié par la boucle audit échangeur additionnel,
**se caractérisant par** la mise en oeuvre des mesures suivantes :
- le camion est muni de plus d'une unité de stockage de froid (50) de type plaque eutectique ou de type élaboré en un matériau dit « à changement de phase », unité qui est située au sein de la dite chambre (5), l'espace interne à ladite chambre étant refroidi par extraction de la chaleur de l'espace à l'aide dudit échangeur principal (44) et/ou dudit échangeur additionnel (22) et/ou de ladite unité de stockage de froid, la chaleur extraite à l'aide dudit échangeur additionnel étant dirigée grâce à la boucle (20) vers ledit échangeur thermique secondaire (21), et donc vers l'évaporateur, pour contribuer à l'évaporation dudit fuel; et en ce que
- lorsque le moteur du camion est en fonctionnement et que la chambre ne nécessite pas d'apport de froid, tout ou partie du froid généré lors de la vaporisation du fuel est stocké dans ladite unité de stockage de froid pour une utilisation ultérieure.

2. Procédé selon la revendication 1, **se caractérisant en ce que** le camion est muni d'un unique système de circulation d'air, et **en ce que** l'arrangement dans la chambre de l'échangeur thermique principal, de l'échangeur thermique additionnel et de l'unité de stockage de froid est tel, que ledit système de circulation d'air est apte à mettre en contact l'air interne à la chambre avec les parois de l"échangeur thermique principal (44), avec les parois de l'échangeur thermique additionnel (22) et avec l'unité de stockage de froid (50).

3. Procédé selon la revendication 1, **se caractérisant en ce que** le camion est muni de trois systèmes de circulation d'air, permettant de pouvoir clairement séparer les flux d'air atteignant chacun des échangeurs principal, additionnel et de stockage.

4. Procédé selon l'une des revendications précédentes, **se caractérisant en ce que** dans le cas où la chambre nécessite un apport de froid, si le moteur du camion est en fonctionnement, on va réaliser cet apport de froid grâce à l'intervention de la boucle et à l'échangeur additionnel, et si nécessaire par l'apport supplémentaire de froid stocké dans l'unité de stockage.

5. Procédé selon la revendication 4, **se caractérisant en ce que** on ne fait intervenir l'échangeur principal et la technique d'injection indirecte d'un fluide dans cet échangeur principal que si la température dans la chambre est durablement supérieure à une température de consigne ou si la vitesse de descente de cette température est insuffisamment élevée, par exemple inférieure à 0.5°C/mn.

6. Procédé selon l'une des revendications 1 à 3, **se caractérisant en ce que** dans le cas où la chambre nécessite un apport de froid, si le moteur du camion est arrêté, on va réaliser cet apport de froid grâce à l'intervention du froid stocké dans l'unité de stockage, et on ne fait intervenir l'échangeur principal et la technique d'injection indirecte d'un fluide dans cet échangeur principal que si la température dans la chambre est durablement supérieure à une température de consigne ou si la vitesse de descente de cette température est insuffisamment élevée, par exemple inférieure à 0.5°C/mn.

7. Procédé selon l'une des revendications 1 à 3, **se caractérisant en ce que** dans le cas où la chambre ne nécessite pas d'apport de froid, et où le moteur du camion est en fonctionnement, on sollicite l'intervention de la boucle et de l'échangeur additionnel, pour maintenir la température dans la chambre à une valeur moyenne choisie, par exemple +10°C, pour ainsi permettre d'éviter de laisser remonter trop haut la température à l'intérieur de la chambre, et ainsi anticiper les phases nécessitant des puissances de froid plus importantes qui surgiraient ultérieurement.

8. Camion de transport frigorifique de produits thermosensibles, du type à injection indirecte, où le camion est muni :
- d'au moins une chambre de stockage (5) des produits ;
- d'une réserve (40) d'un fluide cryogénique ou frigorigène tel l'azote liquide ou le CO₂ liquide ;
- d'une réserve (7) de fuel constituant le carburant pour le moteur du camion ;
- d'un système d'échangeur thermique principal (44) dans lequel circule le fluide cryogénique, système d'échangeur comprenant au moins un échangeur thermique interne à ladite au moins une chambre,
- ainsi que d'un système de circulation d'air, par exemple de type ventilateurs, apte à mettre en contact l'air interne à la chambre avec les parois froides du ou des échangeurs du système d'échangeur thermique principal;
- d'au moins un échangeur thermique ; additionnel (22), nterne à ladite au moins une chambre, échangeur additionnel connecté à d'autres composants permettant la formation d'une boucle (20) d'échange thermique, boucle dans laquelle circule un fluide frigoporteur;
- d'un évaporateur (10) pour gaz combustibles liquéfiés, évaporateur apte à recevoir du fuel en provenance de la dite réserve de fuel et apte à échanger thermiquement avec ladite boucle, évaporateur qui est par ailleurs situé hors de la dite chambre et hors de la dite boucle;
- d'au moins une sonde de température apte à mesurer la température interne à la chambre et de moyens permettant de comparer la valeur fournie par cette sonde à une consigne de température interne ;
ladite boucle (20) comprenant un échangeur thermique secondaire apte à échanger thermiquement avec ledit évaporateur, l'échangeur thermique secondaire étant relié par la boucle audit échangeur additionnel,
**se caractérisant en ce que** le camion est muni de plus d'une unité de stockage de froid (50) de type plaque eutectique ou de type élaboré en un matériau dit « à changement de phase », unité qui est située au sein de la dite chambre, l'espace interne à ladite chambre (5) pouvant être refroidi par extraction de la chaleur de l'espace à l'aide dudit échangeur principal (44) et/ou dudit échangeur additionnel (22) et/ou de ladite unité de stockage de froid, la chaleur extraite à l'aide dudit échangeur additionnel pouvant être dirigée grâce à la boucle vers ledit évaporateur pour contribuer à l'évaporation dudit fuel.

## Patentansprüche

1. Verfahren zur Verwaltung des Betriebs eines Lastkraftwagens für den Kühltransport von wärmeempfindlichen Produkten, vom Typ der indirekten Einspritzung, wobei der Lastkraftwagen versehen ist mit:
- mindestens einer Kammer (5) zum Lagern der Produkte;
- einem Behälter (40) für ein kryogenes oder Kühlmittelfluid wie flüssigen Stickstoff oder flüssiges CO₂;
- einem Behälter (7) für Kraftstoff, der den Brennstoff für den Motor des Lastkraftwagens bildet;
- einem Hauptwärmeaustauschersystem (44), in dem das kryogene Fluid zirkuliert, wobei das Austauschersystem mindestens einen Wärmeaustauscher innerhalb der mindestens einen Kammer umfasst, sowie einem Luftzirkulationssystem (2), zum Beispiel vom Typ Ventilatoren, das in der Lage ist, die Luft innerhalb der Kammer mit den kalten Wänden des oder der Austauscher(s) des Hauptwärmeaustauschersystems in Kontakt zu bringen;
- mindestens einem zusätzlichen Wärmeaustauscher (22) innerhalb der mindestens einen Kammer, wobei der zusätzliche Austauscher mit anderen Komponenten verbunden ist, welche die Bildung einer Wärmeaustauschschleife (20) ermöglichen, wobei in der Schleife ein Kühlfluid zirkuliert;
- einem Verdampfer (10) für verflüssigte Brenngase, wobei der Verdampfer in der Lage ist, Kraftstoff aus dem Kraftstoffbehälter aufzunehmen und in der Lage ist, sich mit der Schleife thermisch auszutauschen, wobei der Verdampfer außerdem außerhalb der Kammer und außerhalb der Schleife angeordnet ist;
- und wobei über mindestens einen Temperaturfühler verfügt wird, der in der Lage ist, die Temperatur innerhalb der Kammer zu messen, sowie über Mittel zum Vergleichen des von diesem Fühler gelieferten Wertes mit einem Temperatursollwert innerhalb der Kammer;
wobei die Schleife einen sekundären Wärmeaustauscher (21) umfasst, der in der Lage ist, sich thermisch mit dem Verdampfer (10) auszutauschen, wobei der sekundäre Wärmeaustauscher (21) durch die Schleife mit dem zusätzlichen Austauscher verbunden ist,
**gekennzeichnet durch** die Umsetzung der folgenden Maßnahmen:
- der Lastkraftwagen ist weiter mit einer Kältespeichereinheit (50) vom Typ eutektische Platte oder vom Typ, der aus einem sogenannten "Phasenwechsel"-Material hergestellt ist, versehen, wobei die Einheit innerhalb der Kammer (5) angeordnet ist,
wobei der Raum innerhalb der Kammer durch Entzug der Wärme aus dem Raum mittels des Hauptaustauschers (44) und/oder des zusätzlichen Austauschers (22) und/oder der Kältespeichereinheit gekühlt wird, wobei die mittels des zusätzlichen Austauschers entzogene Wärme mittels der Schleife (20) zu dem sekundären Wärmeaustauscher (21) und somit zu dem Verdampfer geleitet wird, um zur Verdampfung des Kraftstoffs beizutragen; und **dadurch, dass**
- wenn der Motor des Lastkraftwagens in Betrieb ist und die Kammer keine Kältezufuhr benötigt, die gesamte oder ein Teil der Kälte, die während der Verdampfung des Kraftstoffs erzeugt wird, für eine spätere Verwendung in der Kältespeichereinheit gespeichert wird.

2. Verfahren nach Anspruch 1, **dadurch gekennzeichnet, dass** der Lastkraftwagen mit einem einzigen Luftzirkulationssystem versehen ist, und dadurch, dass die Anordnung in der Kammer des Hauptwärmeaustauschers, des zusätzlichen Wärmeaustauschers und der Kältespeichereinheit derart ist, dass das Luftzirkulationssystem in der Lage ist, die Luft innerhalb der Kammer mit den Wänden des Hauptwärmeaustauschers (44), mit den Wänden des zusätzlichen Wärmeaustauschers (22) und mit der Kältespeichereinheit (50) in Kontakt zu bringen.

3. Verfahren nach Anspruch 1, **dadurch gekennzeichnet, dass** der Lastkraftwagen mit drei Luftzirkulationssystemen versehen ist, die es ermöglichen, die Luftströmungen, die jeden der Haupt-, zusätzlichen und Speicheraustauscher erreichen, klar trennen zu können.

4. Verfahren nach einem der vorstehenden Ansprüche, **dadurch gekennzeichnet, dass** in dem Fall, dass die Kammer eine Kältezufuhr benötigt, wenn der Motor des Lastkraftwagens in Betrieb ist, diese Kältezufuhr durch das Eingreifen der Schleife und des zusätzlichen Austauschers und, falls erforderlich, durch die zusätzliche Zufuhr von in der Speichereinheit gespeicherter Kälte erfolgt.

5. Verfahren nach Anspruch 4, **dadurch gekennzeichnet, dass** das Eingreifen des Hauptaustaustauschers und der Technik der indirekten Einspritzung eines Fluids in diesen Hauptaustaustauscher nur dann erfolgt, wenn die Temperatur in der Kammer dauerhaft über einer Solltemperatur liegt, oder wenn die Absenkgeschwindigkeit dieser Temperatur nicht ausreichend hoch ist, zum Beispiel unter 0,5°C/min.

6. Verfahren nach einem der Ansprüche 1 bis 3, **dadurch gekennzeichnet, dass**, in dem Fall, dass die Kammer eine Kältezufuhr benötigt, wenn der Motor des Lastkraftwagens abgeschaltet ist, diese Kältezufuhr durch das Eingreifen der in der Speichereinheit gespeicherten Kälte erfolgt, und dass das Eingreifen des Hauptaustauschers und der Technik der indirekten Einspritzung eines Fluids in diesen Hauptaustauscher nur dann erfolgt, wenn die Temperatur in der Kammer dauerhaft über einer Solltemperatur liegt oder wenn die Absenkgeschwindigkeit dieser Temperatur nicht ausreichend hoch ist, zum Beispiel weniger als 0,5°C/min.

7. Verfahren nach einem der Ansprüche 1 bis 3, **dadurch gekennzeichnet, dass** in dem Fall, dass die Kammer keine Kältezufuhr benötigt und der Motor des Lastkraftwagens in Betrieb ist, das Eingreifen der Schleife und des zusätzlichen Austauschers beansprucht wird, um die Temperatur in der Kammer auf einem gewählten Mittelwert, zum Beispiel +10°C, zu halten, um somit zu vermeiden, dass die Temperatur im Inneren der Kammer zu stark ansteigt, und um somit die Phasen vorauszusehen, die größere Kühlleistungen erfordern, die später auftreten würden.

8. Lastkraftwagen für den Kühltransport von wärmeempfindlichen Produkten, vom Typ der indirekten Einspritzung, wobei der Lastkraftwagen versehen ist mit:
- mindestens einer Kammer (5) zum Lagern der Produkte;
- einem Behälter (40) für ein kryogenes oder Kühlmittelfluid wie flüssigen Stickstoff oder flüssiges CO₂;
- einem Behälter (7) für Kraftstoff, der den Brennstoff für den Motor des Lastkraftwagens bildet;
- einem Hauptwärmeaustauschersystem (44), in dem das kryogene Fluid zirkuliert, wobei das Austauschersystem mindestens einen Wärmeaustauscher innerhalb der mindestens einen Kammer umfasst,
- sowie einem Luftzirkulationssystem, zum Beispiel vom Typ Ventilatoren, das in der Lage ist, die Luft innerhalb der Kammer mit den kalten Wänden des oder der Austauscher(s) des Hauptwärmetauschersystems in Kontakt zu bringen;
- mindestens einem zusätzlichen Wärmeaustauscher (22) innerhalb der mindestens einen Kammer, wobei der zusätzliche Austauscher mit anderen Komponenten verbunden ist, welche die Bildung einer Wärmeaustauschschleife (20) ermöglichen, wobei in der Schleife ein Kälteträgerfluid zirkuliert;
- einem Verdampfer (10) für verflüssigte Brenngase, wobei der Verdampfer in der Lage ist, Kraftstoff aus dem Kraftstoffbehälter aufzunehmen und in der Lage ist, sich thermisch mit der Schleife auszutauschen, wobei der Verdampfer außerdem außerhalb der Kammer und außerhalb der Schleife angeordnet ist;
- mindestens einem Temperaturfühler, der in der Lage ist, die Temperatur innerhalb der Kammer zu messen und Mittel zum Vergleichen des von diesem Fühler gelieferten Wertes mit einem Temperatursollwert innerhalb der Kammer;
wobei die Schleife (20) einen sekundären Wärmeaustauscher umfasst, der in der Lage ist, sich thermisch mit dem Verdampfer auszutauschen, wobei der sekundäre Wärmeaustauscher durch die Schleife mit dem zusätzlichen Austauscher verbunden ist,
**dadurch gekennzeichnet, dass** der Lastkraftwagen weiter mit einer Kältespeichereinheit (50) vom Typ eutektische Platte oder vom Typ, der aus einem sogenannten "Phasenwechsel"-Material hergestellt ist, versehen ist, wobei die Einheit innerhalb der Kammer angeordnet ist, wobei der Raum innerhalb der Kammer (5) durch Entzug der Wärme aus dem Raum mittels des Hauptaustauschers (44) und/oder des zusätzlichen Austauschers (22) und/oder der Kältespeichereinheit gekühlt wird, wobei die mittels des zusätzlichen Austauschers entzogene Wärme mittels der Schleife zu dem Verdampfer geleitet werden kann, um zur Verdampfung des Kraftstoffs beizutragen.

## Claims

1. Method for managing the operation of a lorry for the refrigerated transport of temperature-sensitive products, of the indirect injection type, where the lorry is provided with:
- at least one chamber (5) for storing products;
- a reserve (40) of a cryogenic or refrigerated fluid such as liquid nitrogen or liquid CO₂;
- a fuel reserve (7) constituting the fuel for the engine of the lorry;
- a main heat exchanger system (44), wherein the cryogenic fluid circulates, exchanger system comprising at least one internal heat exchanger to said at least one chamber as well as an air circulation system, for example of ventilator type, capable of putting the internal air in contact with the chamber with the cold walls of the exchanger(s) of the main heat exchanger system;
- at least one additional heat exchanger (22), inside said at least one chamber, additional exchanger connected to other components allowing the formation of a heat exchange loop (20), loop wherein a cooling fluid circulates;
- an evaporator (10) for liquefied combustible gases, evaporator capable of receiving fuel coming from said fuel reserve and capable of thermally exchanging with said loop, evaporator which is moreover situated outside of said chamber and outside of said loop;
- and at least one temperature probe is arranged, capable of measuring the temperature inside the chamber, as well as means allowing to compare the value supplied by this probe to a temperature setpoint inside the chamber;
said loop comprising a secondary heat exchanger (21) capable of thermally exchanging with said evaporator (10), the secondary heat exchanger (21) being connected by the loop to said additional exchanger,
being **characterised by** the implementation of the following measures:
- the lorry is provided with more than one cold storage unit (50) of the eutectic plate type or of the type developed from a so-called "phase change" material, unit which is situated within said chamber (5), space inside said chamber being cooled by extraction of the heat of the space using said main exchanger (44), and/or said additional exchanger (22) and/or said cold storage unit, the heat extracted using said additional exchanger being directed, thanks to the loop (20) to said secondary heat exchanger (21), and therefore to the evaporator, to contribute to the evaporation of said fuel; and in that
- when the engine of the lorry is in operation and when the chamber does not require any cold input, all or some of the cold generated during the vaporisation of the fuel is stored in said cold storage unit for a later use.

2. Method according to claim 1, being **characterised in that** the lorry is provided with one single air circulation system, and **in that** the arrangement in the chamber of the main heat exchanger, the additional heat exchanger and the cold storage unit is such, that said air circulation system is capable of putting the air inside the chamber in contact with the walls of the main heat exchanger (44), with the walls of the additional heat exchanger (22), and with the cold storage unit (50).

3. Method according to claim 1, being **characterised in that** the lorry is provided with three air circulation systems, allowing to be able to clearly separate the air streams each reaching the main, additional and storage exchangers.

4. Method according to one of the preceding claims, being **characterised in that** in the case where the chamber requires a cold input, if the engine of the lorry is in operation, this cold input will be achieved thanks to the intervention of the loop and the additional exchanger, and if necessary, by the additional input of cold stored in the storage unit.

5. Method according to claim 4, being **characterised in that** the main exchanger and the technique of indirectly injecting a fluid in this main exchanger are only involved if the temperature in the chamber is durably greater than a setpoint temperature or if the falling speed of this temperature is insufficiently high, for example less than 0.5°C/mn.

6. Method according to one of claims 1 to 3, being **characterised in that** in the case where the chamber requires a cold input, if the engine of the lorry is stopped, this cold input will be achieved thanks to the intervention of the cold stored in the storage unit, and the main exchanger and the technique of indirectly injecting a fluid in this main exchanger are involved only if the temperature in the chamber is durably greater than a setpoint temperature or if the falling speed of this temperature is insufficiently high, for example less than 0.5°C/mn.

7. Method according to one of claims 1 to 3, being **characterised in that** in the case where the chamber does not require cold input, and where the engine of the lorry is in operation, the intervention of the loop and of the additional exchanger is urged, to maintain the temperature in the chamber at an average chosen value, for example +10°C, to thus allow to avoid leaving the temperature climbing too high inside the chamber, and thus anticipate the phases requiring too high cold powers which subsequently would arise.

8. Lorry for the refrigerated transport of temperature-sensitive products, of the indirect injection type, where the lorry is provided with:
- at least one chamber (5) for storing products;
- a reserve (40) of a cryogenic or refrigerated fluid such as liquid nitrogen or liquid CO₂;
- a fuel reserve (7) constituting the fuel for the engine of the lorry;
- a main heat exchanger system (44), wherein the cryogenic fluid circulates, exchanger system comprising at least one internal heat exchanger to said at least one chamber,
- as well as an air circulation system, for example of ventilator type, capable of putting the internal air in contact with the chamber with the cold walls of the exchanger(s) of the main heat exchanger system;
- at least one additional heat exchanger (22), inside said at least one chamber, additional exchanger connected to other components allowing the formation of a heat exchange loop (20), loop wherein a cooling fluid circulates;
- an evaporator (10) for liquefied combustible gases, evaporator capable of receiving fuel coming from said fuel reserve and capable of thermally exchanging with said loop, evaporator which is moreover situated outside of said chamber and outside of said loop;
- and at least one temperature probe capable of measuring the temperature inside the chamber and means allowing to compare the value supplied by this probe to a temperature setpoint inside;
said loop (20) comprising a secondary heat exchanger capable of thermally exchanging with said evaporator, the secondary heat exchanger being connected by the loop to said additional exchanger,
being **characterised in that** the lorry is provided with more than one cold storage unit (50) of eutectic plate type or of the type developed from a so-called "phase change" material, unit which is situated within said chamber, space inside said chamber (5) being able to be cooled by extraction of the heat of the space using said main exchanger (44), and/or said additional exchanger (22) and/or said cold storage unit, the heat extracted using said additional exchanger which could be directed, thanks to the loop to said evaporator, to contribute to the evaporation of said fuel.
